Europäisches Patentamt

European Patent Office

Office européen des brevets

(11) Veröffentlichungsnummer: **0 130 937**
**A1**

## (12) EUROPÄISCHE PATENTANMELDUNG

(21) Anmeldenummer: **84810241.4**

(22) Anmeldetag: **16.05.84**

(51) Int. Cl.⁴: **G 01 F 15/07**

(30) Priorität: **26.05.83 CH 2865/83**

(43) Veröffentlichungstag der Anmeldung: **09.01.85**
**Patentblatt 85/2**

(84) Benannte Vertragsstaaten: **IT**

(71) Anmelder: **Iseli, Martin, Wernerstrasse 5, CH-3006 Bern (CH)**

(72) Erfinder: **Iseli, Martin, Wernerstrasse 5, CH-3006 Bern (CH)**

(54) Durchflussmengenmessgerät für Gase und Verwendung desselben.

㊼ Dieser Durchflussmengenmesser für Gase arbeitet mit einem Turbinenrad (2) als Antriebsorgan. Das an das Turbinenrad angekuppelte Untersetzungsgetriebe (7) liegt in einem Gehäuse und ist daher dem Gasstrom nicht ausgesetzt, so dass vom Gasstrom mitgeführte Verunreinigungen nicht in das Getriebe gelangen können. Die Darstellung der durchgeflossenen Gasmenge erfolgt durch eine Analoganzeige (8, 9, 10), die so ausgebildet ist, dass das Gesamtuntersetzungsverhältnis vom Turbinenrad über ein Aufsteckgetriebe bis zum Anzeigeorgan (10) von aussen veränderbar ist. Das Messgerät eignet sich besonders zur Überwachung des Füllungsgrades von Flüssiggasflaschen, was besonders bei der Anwendung von Flüssiggas im Freien, insbesondere beim Camping, sehr erwünscht ist.

Durchflussmengenmessgerät für Gase und Verwendung desselben

Die Erfindung betrifft ein Durchflussmengenmessgerät für Gase mit einem Messflügel , vorzugsweise einem tangential beaufschlagten Turbinenrad als Antriebsorgan und die Verwendung des Gerätes zur Ueberwachung des Gasvorrats in Flüssiggasflaschen .

Zweck der Erfindung ist es , ein Messgerät zu schaffen , das kleine Abmessungen aufweist und konstruktiv einfach ist , so dass es sich billig herstellen lässt und damit seine Anschaffung auch für Freizeitzwecke , insbesondere für's Camping tragbar ist .
Die erfindungswesentlichen Merkmale ergeben sich aus den Patentansprüchen 1 und 4 .
Das Gerät ist vorzugsweise so ausgebildet , dass es mittels flexibler Schläuche zwischen Gasflasche und Verbraucher eingeschaltet werden kann.
Im folgenden wird eine Ausführungsform der Erfindung anhand der Zeichnung näher erläutert . Dabei zeigen :

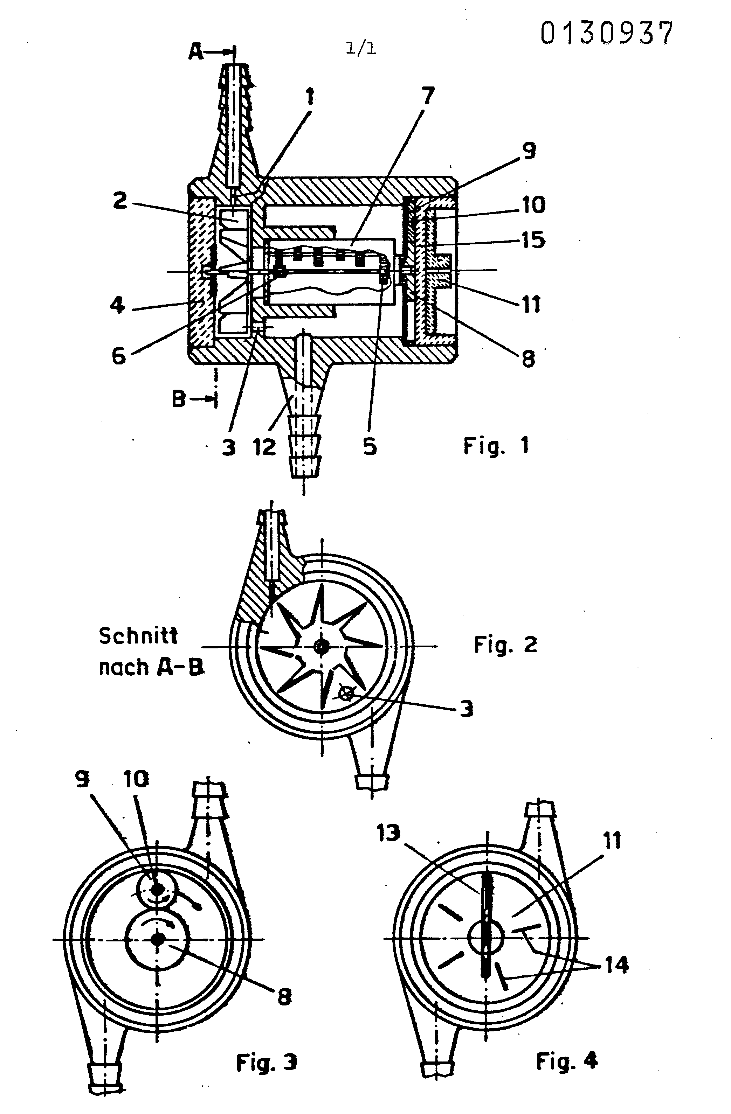

Fig.1    einen Axialschnitt durch das Gerät ,

Fig.2    einen Schnitt  nach der Linie A-B von Fig.1 und

Fig.3 und 4 je eine Stirnansicht auf die Anzeigeseite des
Gerätes .

Das Gas strömt durch eine Düse 1 tangential auf das 8-flügelige Turbinenrad 2 und über das Loch 3 in der Innenwand der Turbinenkammer zum Austrittsstutzen 12 . Die Drehzahl des Turbinenrades ist direkt proportional zur Durchflussgeschwindigkeit und ein von ihm angetriebenes integrierendes Anzeigeorgan gibt somit die jeweils durchgeströmte Gasmenge an . Die Turbinenkammer wird nach aussen durch einen durchsichtigen , schlagfesten Lagerdeckel 4 aus Kunststoff abgedeckt . Damit ist das Turbinenrad von Aussen sichtbar und die Gasströmung ist stets visuell überwachbar . Die gegenüberliegende Lagerung der Turbinenradachse befindet sich im Endritzel 5 des Untersetzungsgetriebes 7 , das beispielsweise eine Untersetzung von 2,7 $\cdot 10^{6}$ : 1 herbeiführt . Zur Anwendung kommt ein handelsübliches Miniatur-Aufsteckgetriebe mit Stirnradverzahnung mit möglichst kleinen Reibungsverlusten , was eine äusserst hohe Ansprechempfindlichkeit auf die Strömung gibt . Der Antrieb des Untersetzungsgetriebes vom Turbinenrad erfolgt über ein Ritzel 6 . Durch die

Verwendung eines mit Ausnahme der antriebsseitigen Stirnfläche abge -
kapselten Getriebes und den Durchflussweg des Gases , befindet sich das
Getriebe zwar in der Gasatmosphäre , wird aber nicht direkt vom Gas
durchströmt . Dadurch wird verhindert , dass vom Gasstrom mitgeführte
Verunreinigungen in das Getriebe gelangen können . Das Untersetzungsgetriebe 7 treibt über das Anzeigeantriebsrad 8 ein Umlaufrädchen 9 an ,
das sich an einer zylindrischen Innenfläche des Anzeigegehäuses abwälzt.
Das Zentrum des Umlaufrädchens 9 trägt einen farbigen Markierungspunkt
10 der den "Zeiger" dieser Analoganzeige darstellt . Der Winkel um den
sich der markierte Mittelpunkt 10 bezüglich der Achse des Rades 8 dreht,
ist somit proportional zur durchgeflossenen Gasmenge , die sich an Markierungsstrichen 14 auf der Rückstellscheibe 11 ablesen lässt . Die beiden Rädchen 8 und 9 lassen sich nach Wegnahme der Rückstellscheibe 11
und einer weiteren durchsichtigen und gasdichten Abdeckscheibe 15 abziehen und können durch ein Räderpaar 8,9 mit einem anderen Durchmesserverhältnis ersetzt werden , wodurch das Gesamtuntersetzungsverhältnis
zwischen Turbinenrad und "Zeiger" 9 verändert werden kann . Die Rückstellscheibe 11 ist mit einem Einstellschlitz 13 als Nullmarkierung und
mehreren Strichmarkierungen 14 versehen , die eine Skala für die Durchflussmenge darstellen können .
Bei der Verwendung des Gerätes für die Ueberwachung des Füllungsgrades
von Flüssiggasflaschen werden Strichmarken so angebracht , dass jede
derselben einem bestimmten Gasflaschentyp zugeordnet ist ; derart dass
beim Erreichen einer Strichmarkierung durch den "Zeiger" 10 der Leerzustand der betreffenden Flasche signalisiert wird . Die Rückstellscheibe
11 ist drehbar in der Abdeckscheibe 15 gelagert , ein unbeabsichtigtes
Verdrehen derselben wird jedoch durch eigene Federkraft mit der sie
sich gegen die Abdeckscheibe 15 abstützt verhindert .
Bei der Ueberwachung einer Gasflasche wird wie folgt vorgegangen :
Das Gerät wird über flexible Schläuche zwischen die volle Gasflasche
und den Verbraucher eingeschaltet und die Rückstellscheibe verdreht ,
bis sich die Nullmarkierung , d.h. der Schlitz 13 der Rückstellscheibe
11 über dem farbigem Mittelpunkt 10 des Umlaufrädchens befindet . Bei
Gasentnahme dreht sich das Rädchen 9 , wobei der Winkelabstand seines
Mittelpunktes von der Nullmarkierung der der gerade in Betrieb befindfindlichen Flasche zugeordneten Strichmarke 14 ein Mass für den noch

verfügbaren Gasvorrat gibt . Mit zwei Räderpaaren und einigen Strichmarken auf der Rückstellscheibe ist das Gerät für praktisch alle handelsüblichen Gasflaschen verwendbar .

Patentansprüche

1. Durchflussmengenmessgerät für Gase mit einem Messflügel , dadurch gekennzeichnet , dass das vom Messflügel (2) angetriebene Aufsteck-Untersetzungsgetriebe (7) nicht dem Gasstrom ausgesetzt und somit vor Verschmutzung geschützt ist und dass die angekoppelte Analoganzeige (9,10,11)
ohne Beeinflussung der Gasatmosphäre von aussen rückstellbar ist und die
eine Veränderung der Gesamtuntersetzung vom Messflügel (2) zum Anzeige -
organ (9,10) zulässt.

2. Messgerät nach Patentanspruch 1 , dadurch gekennzeichnet , dass die
Welle am Ausgang des Untersetzungsgetriebes mit einem Anzeige-Antriebsrad (8) gekuppelt ist , das seinerseits ein Umlaufrädchen (9) antreibt ,
das sich auf einer zylindrischen Innenfläche des Anzeigegehäuses abwälzt
und dessen Zentrum mit einer farbigen Markierung (10) versehen ist , die
das Zeigerorgan darstellt und beide Räder (8,9) auswechselbar sind , um
die Gesamtuntersetzung ändern zu können .

3. Messgerät nach Patentanspruch 2 , dadurch gekennzeichnet , dass das
Anzeige-Antriebsrad (8) und das Umlaufrädchen (9) mittels einer durchsichtigen Abdeckscheibe (15) gasdicht von der Umgebung abgeschlossen sind
und eine mit Strichmarkierungen (14) versehene Rückstellscheibe (11) von
aussen verdrehbar ist , wobei sie durch eigene Federkraft in der jeweils
eingestellten Lage festgeklemmt ist .

4. Verwendung des Durchflussmessgerätes nach Patentanspruch 3 zur Ueberwachung des Füllungsgrades von Flüssiggasflaschen , wobei die durchsichtige Rückstellscheibe (11) nach Anschluss des Gerätes an eine volle Gasflasche mit ihrer Nullmarkierung (13) auf den Mittelpunkt (10) des Umlaufrädchens (9) eingestellt wird und die Strichmarkierungen (14) den
verschiedenen Flaschentypen derart zugeordnet sind , dass das Zeigerorgan
(10) den Leerzustand der betreffenden Flasche anzeigt wenn es die entsprechende Markierung erreicht hat.

0130937

1/1

Fig. 1

Schnitt nach A-B

Fig. 2

Fig. 3

Fig. 4

0130937

Nummer der Anmeldung

EP 84 81 0241

# Europäisches Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| Y | DE-A-1 698 463 (YAZAHI METER CO., LTD.)(10.12.1970) * Seiten 6-8; Abbildungen * | 1-4 | G 01 F 15/07 |
| Y | DE-A-1 574 010 (POLLUX GmbH WASSERMESSER- UND ARMATURENFABRIK)(13.05.1971) * Insgesamt * | 1,2 | |

| | | | RECHERCHIERTE SACHGEBIETE (Int. Cl. 3) |
|---|---|---|---|
| | | | G 01 F |

Der vorliegende Recherchenbericht wurde für alle Patentansprüche erstellt.

| Recherchenort DEN HAAG | Abschlußdatum der Recherche 11-09-1984 | Prüfer NUIJTEN E.M. |
|---|---|---|